# EUROPEAN PATENT APPLICATION

(11) **EP 2 209 294 A2**
(43) Date of publication of application: **21.07.2010**
(21) Application number: 09174535.6
(22) Date of filing: 29.10.2009
(51) Int. Cl.: H04N 1/00, G09G 3/00

(54) **Display apparatus, scanner, display system, and display method using the same**

(30) Priority: 14.01.2009 KR 20090003123
(71) Applicant: Samsung Electronics Co., Ltd., Suwon-si, Gyeonggi-do 442-742 (KR)
(72) Inventor: Jeong, Ki-jun, Seoul (KR); Cho, Seong-il, Seoul (KR); Kang, Jung-ming, Seoul (KR); Seo, Young-kwang, Seoul (KR)
(74) Representative: Land, Addick Adrianus Gosling

(57) **Abstract**

A display apparatus, a scanner, a display system, and a display method using the same are provided. The display apparatus (100) includes a first display (131), a second display (133), a hinge unit (180), and a control unit which displays a scanned image on at least one of the first display and the second display. Therefore, a user can view images scanned by the scanner (200) with greater ease and greater convenience. In addition, the scanner can be mounted in the display apparatus with maximized efficiency of space.

## Description

This application claims priority from Korean Patent Application No. 10-2009-0003123, filed on January 14, 2009, in the Korean Intellectual Property Office, the disclosure of which is incorporated herein by reference in its entirety.

Apparatuses and methods consistent with exemplary embodiments of the present invention relate to a display apparatus, a scanner, a display system, and a display method using the same, and more particularly, to a display apparatus to directly receive an image scanned by a scanner, the scanner to be mounted in the display apparatus, a display system consisting of the display apparatus and the scanner, and a display method using the same.

### Description of the Related Art

As technology regarding digital images develops, it is possible to obtain images using digital devices such as cameras, camcorders, scanners, and mobile phones. In order to view the obtained image data, the image data have to be transmitted to digital devices such as a display apparatus.

In particular, image data scanned by a scanner are firstly transmitted to a personal computer, secondly transmitted from the personal computer to a display apparatus, and thus can be output on screen. That is, image data scanned by a scanner can be displayed on screen only after being transmitted twice.

In addition, if a display apparatus consists of a plurality of frames, a single frame can output only a single image and each frame uses each power supply, so communication between the frames is not possible.

Therefore, there is a need for methods for a user to use a display apparatus more easily and conveniently.

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above.

An aspect of an exemplary embodiment of the present invention provides a display apparatus to directly receive an image scanned by a scanner, the scanner to be mounted in the display apparatus, a display system consisting of the display apparatus and the scanner, and a display method using the same.

According to an exemplary aspect of the present invention, there is provided a display apparatus, including a first display, a second display, a first hinge unit which connects the first display to the second display, and a control unit which displays an image scanned by a scanner, which is detachably mounted in the first hinge, on at least one of the first display and the second display.

The first hinge unit may include a first interface which receives the scanned image from the scanner.

The display apparatus may further include a storage unit which stores the scanned image, wherein if the scanner is mounted in the first hinge unit, the control unit updates images stored in the storage unit based on the image stored in the scanner.

The display apparatus may further include a power supply unit which supplies power, wherein if the scanner is mounted in the first hinge unit, the control unit transmits the power from the power supply to the scanner through the first interface.

The first interface may include at least one of a Universal Serial Bus (USB) interface and a Recommended Standard (RS)-232 interface.

The first hinge unit may include a magnetic unit which fixes the scanner mounted in the first hinge unit.

The display apparatus may further include a second hinge unit which connects at least one of the first display and the second display to an external display.

The second hinge unit may include a second interface which is connected to at least one of the scanner mounted in the second hinge unit and the external display.

The external display may display an image received through the second interface.

The display apparatus may further include a power supply unit which supplies power, wherein the scanner mounted in the second hinge unit and the external display receive the power from the power supply unit through the second interface.

The first hinge unit may be disposed on one side of the first display or the second display, and the second hinge unit may be disposed on a side opposite the one side of the first display or the second display.

The first display and the second display rotate with respect to the scanner as an axis.

The display apparatus may further include a wireless reception module which wirelessly receives the scanned image from the scanner.

At least one of the first display and the second display may operate in a touch screen manner.

The display apparatus may further include a manipulation unit which manipulates a mode of the scanner, wherein the mode of the scanner includes a scan mode to perform scanning and a touch mode to touch at least one of the first display and the second display.

The scanner may include a Universal Serial Bus (USB) interface which transmits the scanned image to the display apparatus when the scanner is mounted in the first hinge unit, and a wireless transmission module which wirelessly transmits the scanned image to the display apparatus when the scanner is separated from the first hinge unit.

The scanner may be a pen-type scanner, and the display apparatus may be an electronic album.

According to another exemplary aspect of the present invention, there is provided a scanner, including a scan module which scans an image, an interface which transmits the scanned image, a mode manipulation unit which sets a mode of the scanner, and a control unit which determines whether to scan the image based on the set mode, and determines whether to transmit the scanned image based on whether the scanner is mounted in a display apparatus.

According to another exemplary aspect of the present invention, there is provided a display system, including a display unit which includes a plurality of displays, which are connected to each other to be capable of being folded using a hinge, and which outputs an externally received image to at least one of the plurality of displays, and a scanner which is detachably mounted in the hinge, and which transmits a scanned and stored image to the display unit if the scanner is mounted in the hinge.

According to another exemplary aspect of the present invention, there is provided a display method, including determining whether a scanner is mounted in a hinge which connects a plurality of displays so that the plurality of displays can be folded, receiving an scanned image from the scanner if the scanner is mounted in a hinge, and outputting the received image to at least one of the plurality of displays.

### BRIEF DESCRIPTION OF THE DRAWINGS

The above and/or other aspects of the present invention will be more apparent by describing certain exemplary embodiments of the present invention with reference to the accompanying drawings, in which:
FIGS. 1A through 1C illustrate an operation of a display system according to an exemplary embodiment of the present invention;
FIG. 2 is a flowchart illustrating a method for updating an image according to an exemplary embodiment of the present invention;
FIG. 3 is a flowchart illustrating a method for supplying power according to an exemplary embodiment of the present invention;
FIG. 4 is a schematic block diagram illustrating an electronic album according to an exemplary embodiment of the present invention;
FIGS. 5A and 5B illustrate two methods for displaying an image;
FIG. 6 is a flowchart illustrating a process of displaying an image according to the mode;
FIG. 7 is a schematic block diagram illustrating a scanner according to an exemplary embodiment of the present invention;
FIGS. 8A and 8B illustrate the structure of the electronic album and the scanner according to an exemplary embodiment of the present invention;
FIG. 9 illustrates a pen mode of a scanner;
FIG. 10 is a flowchart illustrating an operation of the scanner according to the mode;
FIG. 11 illustrates a process of transmitting scanned images wirelessly;
FIGS. 12A through 12D illustrate an extended electronic album;
FIG. 13 is a flowchart illustrating a process of displaying an image according to the mode; and
FIG. 14 is a schematic block diagram illustrating a slave device according to an exemplary embodiment of the present invention.

### DETAILED DESCRIPTION OF EXEMPLARY EMBODIMENTS OF THE INVENTION

Certain exemplary embodiments of the present invention will now be described in greater detail with reference to the accompanying drawings.

In the following description, like drawing reference numerals are used for like elements, even in different drawings. The matters defined in the description, such as detailed construction and elements, are provided to assist in a comprehensive understanding of the invention. However, the present invention can be practiced without those specifically defined matters. Also, well-known functions or constructions are not described in detail since they would obscure the invention with unnecessary detail.

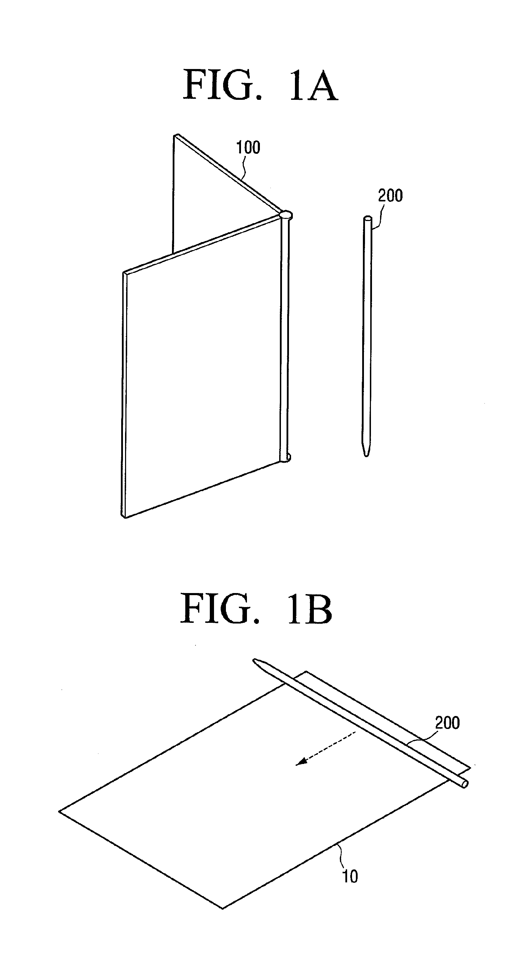

FIGS. 1A through 1C illustrate an operation of a display system according to an exemplary embodiment of the present invention. As illustrated in FIG. 1A, the display system may include an electronic album 100 and a scanner 200.

The electronic album 100 is a kind of device for outputting image data such as pictures. A user can sequentially view image data stored internally or externally using the electronic album 100, edit the image data, and add audio data such as background music to the image data.

The electronic album 100 may include two displays which are connected to be capable of being folded, and outputs an image received from the scanner 200 using the two displays.

The scanner 200 is a pen-type scanner which scans and stores letters or figures on an object to be scanned. A process of scanning an object using the scanner 200 is illustrated in FIG. 1B.

As illustrated in FIG. 1B, the pen-type scanner 200 has a scan module (not shown) which is disposed in a longitudinal direction. Accordingly, if the scanner 200 moves, letters or figures on an object 10 passed through by the scanner 200 are scanned.

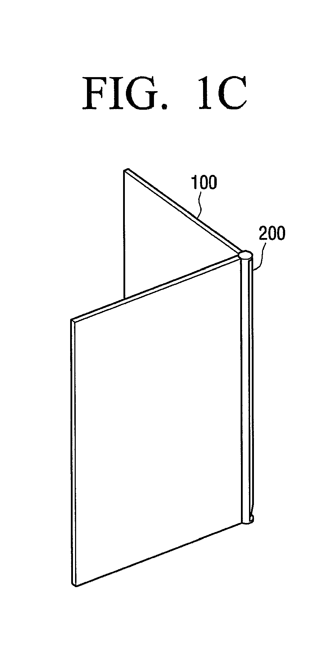

The scanner 200 is detachably connected to the electronic album 100 as illustrated in FIG. 1C.

As illustrated in FIG. 1C, the scanner 200 is mounted between the two displays of the electronic album 100. If the scanner 200 is mounted in the electronic album 100, the electronic album 100 compares images scanned and stored by the scanner 200 with images stored in an internal storage medium of the electronic album 100, and updates the images scanned and stored by the scanner 200 in the internal storage medium. In addition, if the canner 200 is mounted in the electronic album 100, the electronic album 100 displays the updated images on the displays and supplies power to the scanner 200 so that the scanner 200 can be charged.

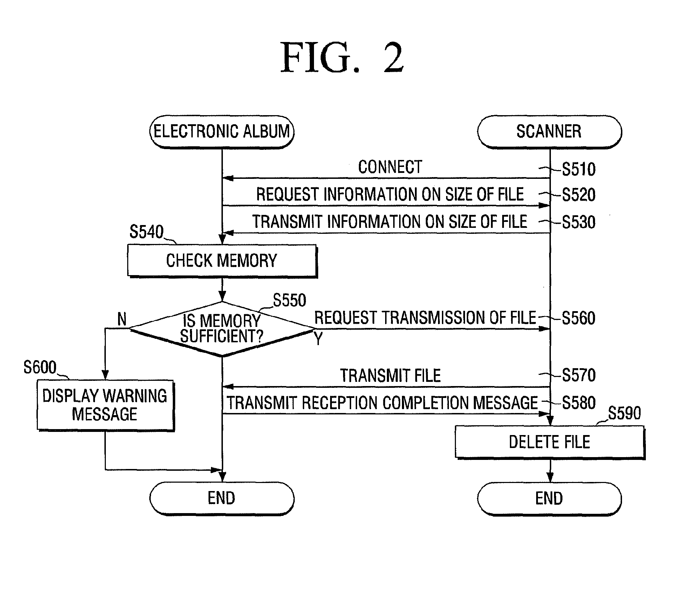

Hereinafter, updating an image is described with reference to FIG. 2.

FIG. 2 is a flowchart illustrating a method for updating an image according to an exemplary embodiment of the present invention. If the scanner 200 is connected to the electronic album 100 (S510), the electronic album 100 transmits a message for requesting information on the size of an image file stored in the scanner 200 to the scanner 200 (S520).

Subsequently, the scanner 200 transmits information on the size of the image file to the electronic album 100 in response to the request message (S530).

The electronic album 100 checks the internal memory (S540) and determines if the internal memory is sufficient (S550). That is, the electronic album 100 determines if the remaining capacity of the internal memory is larger than the size of the image file to be received from the scanner 200. If the internal memory is sufficient (S550-Y), the electronic album 100 transmits a message for requesting transmission of the image file to the scanner 200 (S560) and the scanner 200 transmits the image file to the electronic album 100 in response to the request message (S570).

After receiving the image file, the electronic album 100 transmits a reception completion message to the scanner 200 (S580), and the scanner 200 receives the reception completion message and deletes the image file so as to ensure storage space for next scanning (S590).

In operation S550, if the internal memory is not sufficient (S550-N), the electronic album 100 displays a warning message indicating that the memory is not sufficient on the displays (S600).

Following this process, an image scanned by the scanner 200 is moved to and displayed onto the electronic album 100 in a viewable format.

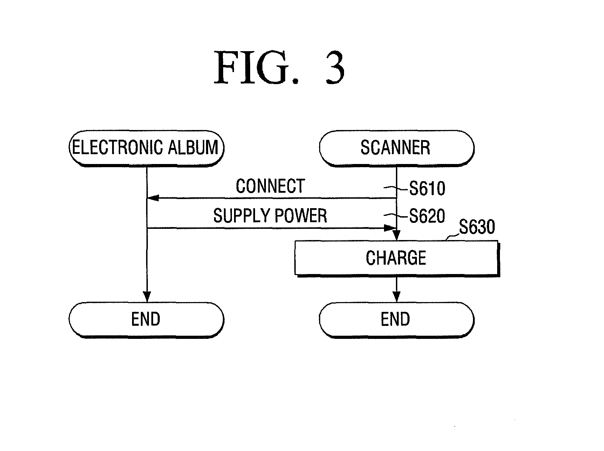

Hereinafter, supplying power is described with reference to FIG. 3.

FIG. 3 is a flowchart illustrating a method for supplying power according to an exemplary embodiment of the present invention. If the scanner 200 is connected to the electronic album 100 (S610), the electronic album 100 supplies power to the scanner 200 so that the scanner can be charged (S620).

Therefore, the scanner 200 can perform scanning without a separate power supply. Furthermore, since there is no separate power supply, the volume of the scanner 200 can be minimized and it is easy for the user to move the scanner 200 and mount the scanner 200 in the electronic album 100.

Updating an image with reference to FIG. 2 and supplying power with reference to FIG. 3 may be performed using a data transmission line and a power supply line respectively, and may be performed together using a Universal Serial Bus (USB) interface.

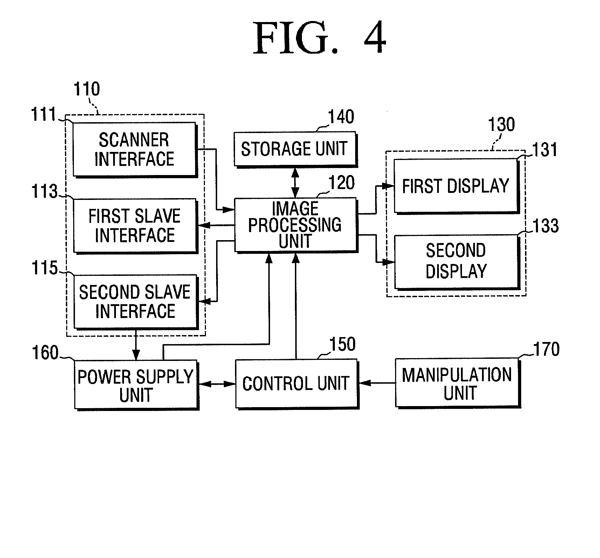

Hereinafter, the electronic album 100 which displays an image received from the scanner 200 and supplies power to the scanner 200 is described with reference to FIG. 4, which is a schematic block diagram illustrating the electronic album 100 according to an exemplary embodiment of the present invention.

As illustrated in FIG. 4, the electronic album 100 may include an interface unit 110, an image processing unit 120, a display unit 130, a storage unit 140, a control unit 150, a power supply unit 160, and a manipulation unit 170.

The interface unit 110 enables the electronic album 100 to communicate with external devices such as the scanner 200. The interface unit 110 may include a scanner interface 111, a first slave interface 113, and a second slave interface 115.

The scanner interface 111 enables the electronic album 100 to perform communication of data and power with the scanner 200 as described above. More specifically, the electronic album 100 receives an image scanned by the scanner 200 and supplies power to the scanner 200 through the scanner interface 111. The scanner interface 111 is disposed on a first hinge unit which will be described later.

The first slave interface 113 and the second slave interface 115 enable the electronic album 100 to communicate with display devices (referred to hereinafter as "slave devices") which can be additionally connected to the electronic album 100. The first slave interface 113 communicates with a first slave device which can be connected to the left display of the electronic album 100. The second slave interface 115 communicates with a second slave device which can be connected to the right display of the electronic album 100.

That is, through the first slave interface 113, the electronic album 100 transmits an image received from the scanner 200 and power supplied by the power supply unit 160 to the first slave device. Through the second slave interface 115, the electronic album 100 transmits an image received from the scanner 200 and power supplied by the power supply unit 160 to the second slave device.

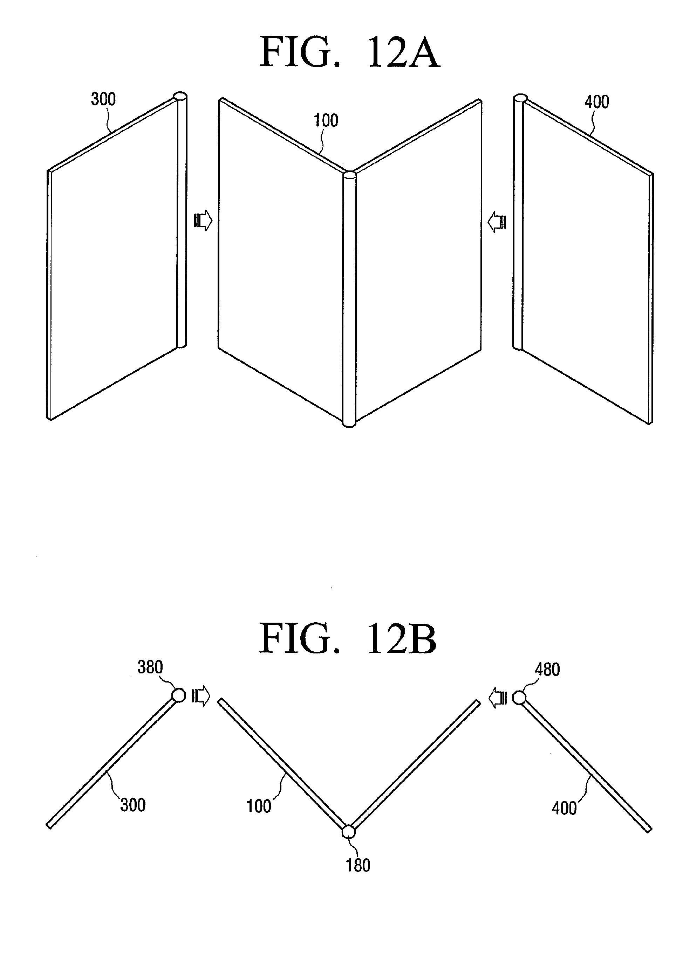

Accordingly, the first slave device and the second slave device can constitute an extended electronic album together with the electronic album 100 and display an image received form the scanner 200 together. In addition, the first slave device and the second slave device can display images using power supplied by the electronic album 100 without each power supply. The extended electronic album will be described later with reference to FIGS. 12A through 12D.

The first slave interface 113 and the second slave interface 115 are disposed on second hinge units which are formed on the both ends of the electronic album 100. The second hinge units will be described later.

The scanner interface 111, the first slave interface 113, and the second slave interface 115 may be implemented as a USB or a Recommended Standard (RS)-232.

An image received from the scanner 200 through the scanner interface 111 is transmitted to the image processing unit 120.

The image processing unit 120 performs signal-processing of the image such as decompression and playback, and converts the image into an output format. More specifically, the image processing unit 120 decompresses and scales the image received through the scanner interface 111, and transmits the processed image to the display unit 130. If the first slave device or the second slave device is connected to the electronic album 100, the image processing unit 120 also transmits the processed image to the first slave device or the second slave device.

The display unit 130 may include a first display 131 and a second display 133. The first display 131 and the second display 133 output an image received from the image processing unit 120.

The storage unit 140 stores program information needed to control the electronic album 100 and images received from the scanner 200. The storage unit 140 may be implemented as flash memory, hard disk, a Digital Versatile Disc (DVD), or the like.

The power supply unit 160 supplies power to operate the entire units in the electronic album 100. In addition, the power supply unit 160 supplies power to the scanner 200, the first slave device, or the second slave device through the interface unit 110 according to control of the control unit 150. Accordingly, the scanner 200, the first slave device, and the second slave device can operate using power supplied from the power supply unit 160 without separate power supplies.

The manipulation unit 170 receives a user command and transmits the user command to the control unit 150.

The control unit 150 controls the overall operation of the electronic album 100 according to the user command using the manipulation unit 170. More specifically, if the scanner 200 is connected to the scanner interface 111, the control unit 150 controls the scanner interface 111 to receive an image scanned by the scanner 200, and controls the power supply unit 160 to supply power to the scanner 200 through the scanner interface 111.

Furthermore, if the first slave device or the second slave device is connected to the first slave interface 113 or the second slave interface 115, the control unit 150 controls the image processing unit 120 to transmit a processed image to the first slave device or the second slave device through the first slave interface 113 or the second slave interface 115 so that the first slave device or the second slave device can display the image. In addition, if the first slave device or the second slave device is connected to the first slave interface 113 or the second slave interface 115, the control unit 150 controls the power supply unit 160 to supply power to the first slave device or the second slave device through the first slave interface 113 or the second slave interface 115.

Therefore, the user can view an image scanned by a scanner with greater ease and greater convenience, it is more convenient to connect displays and connect a display device to a scanner, and it is easier to transfer data and power.

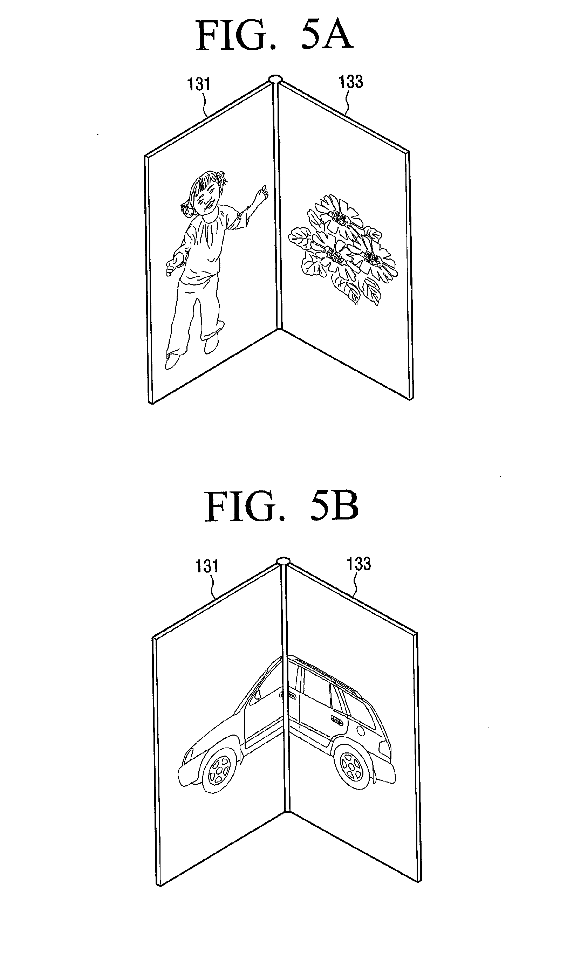

FIGS. 5A and 5B illustrate two methods for displaying an image. As illustrated in FIGS. 5A and 5B, the electronic album 100 includes the first display 131 and the second display 133, and images received from the scanner 200 are output to the first display 131 and the second display 133. The electronic album 100 may display different images on the first display 131 and the second display 133 as illustrated in FIG. 5A, or may display a single image on the first display 131 and the second display 133 together as illustrated in FIG. 5B.

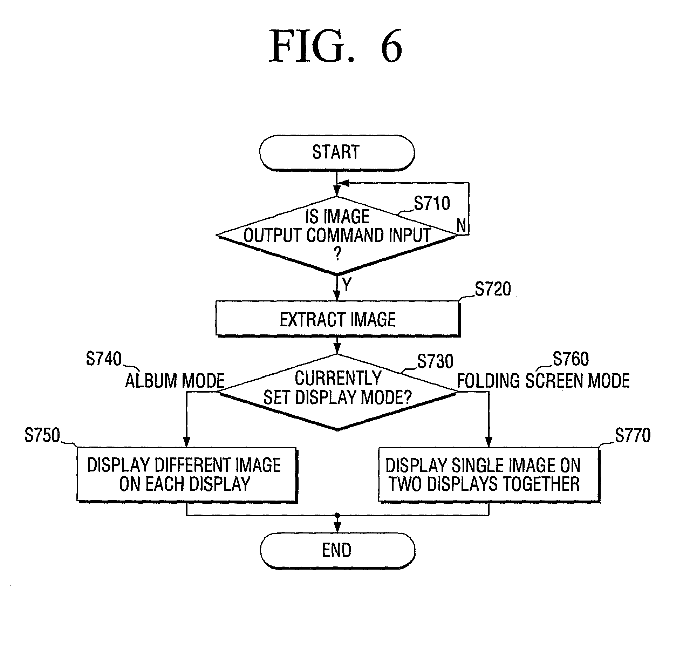

Detailed description is illustrated in FIG. 6, which is a flowchart illustrating a process of displaying an image according to the mode.
The control unit 150 determines if a command to output a scanned image is input (S710). Such a command is a command to output an image which has been received from the scanner 200 and has been stored in the storage unit 140, and can be input by the user's manipulation through the manipulation unit 170. Alternatively, such a command is a command to output an image which is stored in the scanner 200 just connected to the electronic album 100, and can be automatically generated and input when the scanner 200 is connected to the scanner interface 111.

The control unit 150 may extract an image pre-stored in the storage unit 140 or an image stored in the scanner 20 through the scanner interface 111 (S720).

The control unit 150 determines a currently set display mode (S730). The display mode may include an album mode and a folding screen mode.

The album mode is a mode for displaying different images on the displays. That is, as described above, an image is displayed on the first display 131 and another image is displayed on the second display 133. The folding screen mode is a mode for displaying a single image on all the displays. As described above, a single image is displayed on the first display 131 and the second display 133 together.

Accordingly, if the control unit 150 determines that the album mode is currently set (S740), the control unit 150 controls the image processing unit 120 to display a different image on each display (S750). If the control unit 150 determines that the folding screen mode is currently set (S760), the control unit 150 controls the image processing unit 120 to display a single image on the two displays (S770).

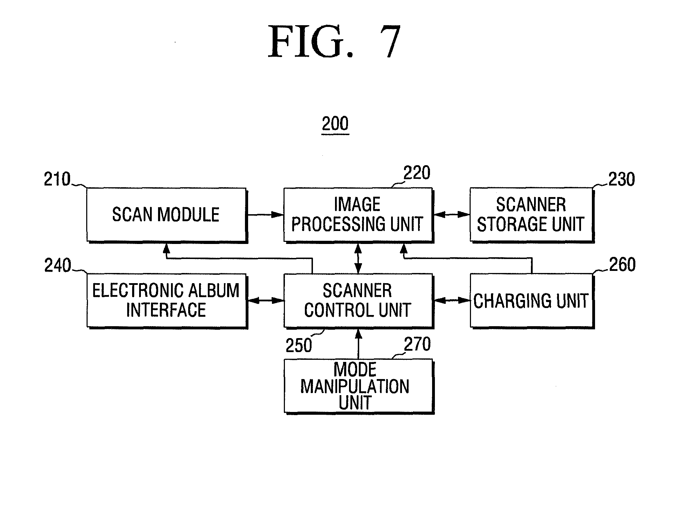

Consequently, the user can select a desired display mode and display an image on the electronic album 100. Hereinafter, the scanner 200 to scan an image is described with reference to FIG. 7, which is a schematic block diagram illustrating the scanner 200 according to an exemplary embodiment of the present invention. The scanner 200 scans and stores letters or figures on an object to be scanned, and transmits the scanned image to the electronic album 100 if the scanner 200 is mounted in the electronic album 100.

As illustrated in FIG. 7, the scanner 200 may include a scan module 210, an image processing unit 220, a scanner storage unit 230, an electronic album interface 240, a scanner control unit 250, a charging unit 260, and a mode manipulation unit 270.

The scan module 210 irradiates light to an object to be scanned and senses the light reflected from the object so that data written on the object can be scanned. To this end, the scan module 210 may include a light source (not shown) to irradiate light, an image sensor (not shown) to sense light reflected from an object, and a condensing lens (not shown) to condense the reflected light into the image sensor.

The scan module 210 transmits the scanned image to the image processing unit 220.

The image processing unit 220 processes the scanned image so as to convert the scanned image into a storable format. More specifically, the image processing unit 220 generates an image corresponding to the data written on the object using the level of light sensed by the scan module 210. In addition, the image processing unit 220 performs signal-processing, such as noise removal and scaling, of the generated image, and converts the image into a format to be stored in the scanner storage unit 230.

The scanner storage unit 230 stores program information needed to control the scanner 200, and scanned images. The scanner storage unit 230 may be implemented as flash memory or the like.

The electronic album interface 240 enables the scanner 200 to communicate with the electronic album 100. The scanner 200 transmits the scanned image to the electronic album 100 and receives power from the electronic album 100 through the electronic album interface 240.

The scanner control unit 250 controls the overall operation of the scanner 200. More specifically, the scanner control unit 250 controls the scan module 210 to scan an object, and controls the image processing unit 220 to process the scanned image, and controls the charging unit 260 to be charged using the scanner 200 using power received from the electronic album 200.

The charging unit 260 charges the scanner 200 using power supplied by the electronic album 100 through the electronic album interface 240. That is, the scanner 200 has no separate power supply, and uses power supplied by the power supply unit 160 of the electronic album 100.

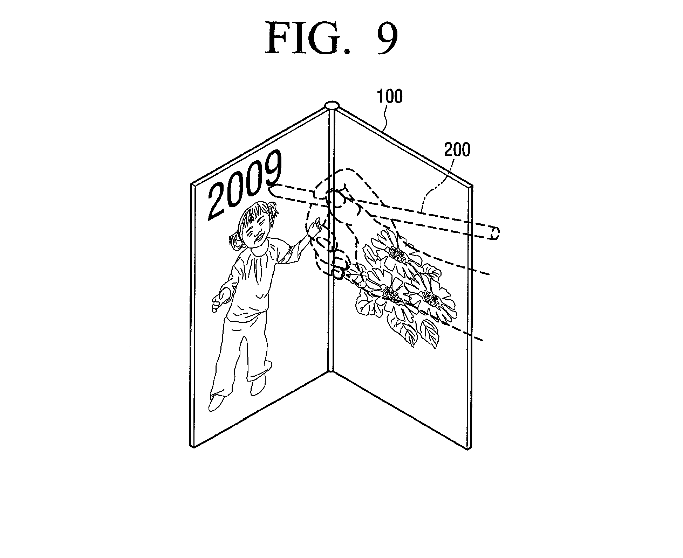

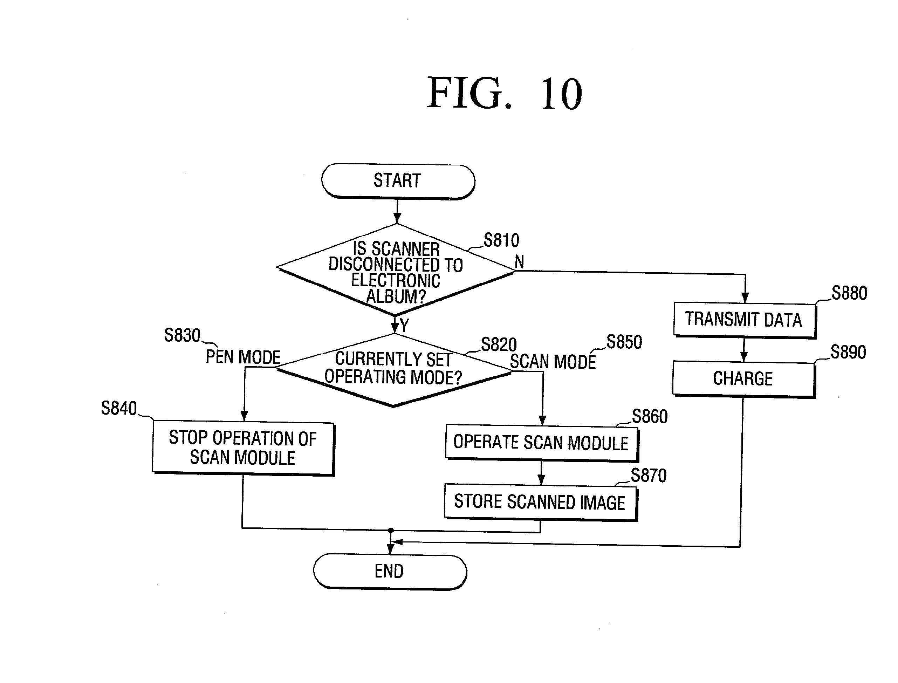

The mode manipulation unit 270 enables the user to select the mode of the scanner 200. If the mode of the scanner 200 is changed, the mode manipulation unit 270 transmits information on the changed mode to the scanner control unit 250. The mode of the scanner 200 will be described later with reference to FIGS. 9 and 10.

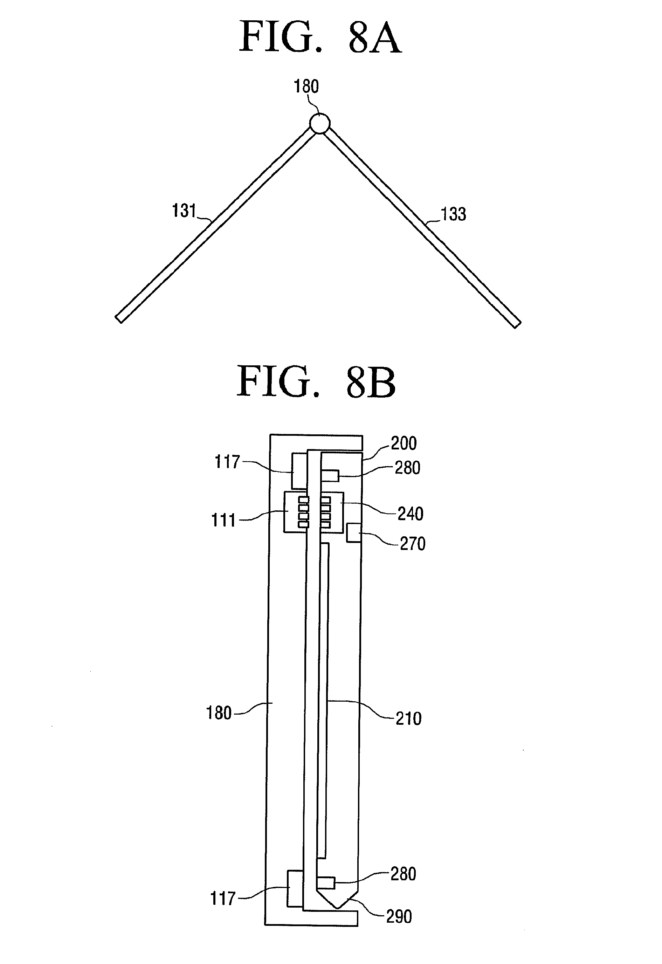

FIGS. 8A and 8B illustrate the structure of the electronic album 100 and the scanner 200 according to an exemplary embodiment of the present invention.

FIG. 8A is an upper side view of the electronic album 100. As illustrated in FIG. 8A, the electronic album 100 includes the first display 131 and the second display 133. The first display 131 and the second display 133 are connected through a first hinge unit 180. The hinge unit 180 is an axis about which the first display 131 and the second display 133 folds.

The scanner 200 is mounted in the first hinge unit 180. That is, the first hinge unit 180 has space for accommodating the scanner 200. Mounting the scanner 200 in the first hinge unit 180 is described with reference to FIG. 8B.

FIG. 8B is a perspective view illustrating the scanner 200. In FIG. 8B, the first hinge unit 180 is illustrated together for convenience of description. As illustrated, the scanner 200 may include a scan module 210, an electronic album interface 240, a mode manipulation unit 270, a scanner magnetic unit 280, and a pen tip 290. The scanner 200 in FIG. 7 further includes the image processing unit 220, the scanner storage unit 230, the scanner control unit 250, and the charging unit 260, but in order to focus on the structural features of the scanner 200, the image processing unit 220, the scanner storage unit 230, the scanner control unit 250, and the charging unit 260 are omitted in FIG. 8.

The scan module 210 is disposed on the scanner 200 along a longitudinal direction, so a wide area can be easily scanned.

The electronic album interface 240 is positioned to be connected to the scanner interface 111 formed on the first hinge unit 180.

The mode manipulation unit 270 is positioned to be easily manipulated by fingers of the user holding the scanner 200.

The scanner magnetic unit 280 is positioned to be in contact with an electronic album magnetic unit 117 formed on the first hinge unit 180. The scanner magnetic unit 280 and the electronic album magnetic unit 117 are connected by magnetism. That is, if the scanner magnetic unit 280 is metal, the electronic album magnetic unit 117 is magnetic, or if the scanner magnetic unit 280 is magnetic, the electronic album magnetic unit 117 is metal. Alternatively, if both the scanner magnetic unit 280 and the electronic album magnetic unit 117 are magnetic, their magnetic polarities are opposite.

As described above, the first hinge unit 180 and the scanner 200 can be connected using magnetism, so communication between the electronic album interface 240 and the scanner interface 111 can go smoothly.

The pen tip 290 has a pointy shape, so top and bottom of the scanner 200 can be intuitively distinguished. That is, the user can distinguish top and bottom of the scanner 200, and thus mount the scanner 200 in the first hinge unit 180 so as to connect the electronic album interface 240 to the scanner interface 111.

The pen tip 290 is pointed, so if the display unit 130 is implemented as a touch screen, the user can touch the display unit 130 using the pen tip 290.

FIG. 9 illustrates a pen mode of the scanner 200. As illustrated in FIG. 9, the scanner 200 can touch the electronic album 100 implemented as a touch screen and take notes on the electronic album 100. Accordingly, the electronic album 100 can store an image with a memo.

If the scanner 200 operates in a scan mode, the scanner 200 scans an object and stores a scanned image as illustrated in FIG. 1B.

FIG. 10 is a flowchart illustrating an operation of the scanner 200 according to the mode. It is determined whether the electronic album 100 and the scanner 200 are disconnected (S810). This can be determined by checking whether the electronic album magnetic unit 117 and the scanner magnetic unit 280 are disconnected or whether the scanner interface 111 and the electronic album interface 240 are disconnected.

Subsequently, the scanner 200 determines a currently set operating mode (S820). As described above, the operating mode may include the pen mode and the scan mode.

If it is determined that the scanner 200 operates in the pen mode (S830), the scanner 200 stops operation of the scan module 210 (S840). If it is determined that the scanner 200 operates in the scan mode (S850), the scanner 200 operates the scan module 210 (S860) and stores a scanned image in the scanner storage unit 230 (S870).

In operation S810, if it is determined whether the electronic album 100 and the scanner 200 are connected (S810-N), the scanner 200 transmits scanned image data to the electronic album 100 (S880) and is charged using power received from the electronic album 100 (S890).

The scanner 200 may transmit a scanned image to the electronic album 100 even when the scanner 200 is not connected to the electronic album 100.

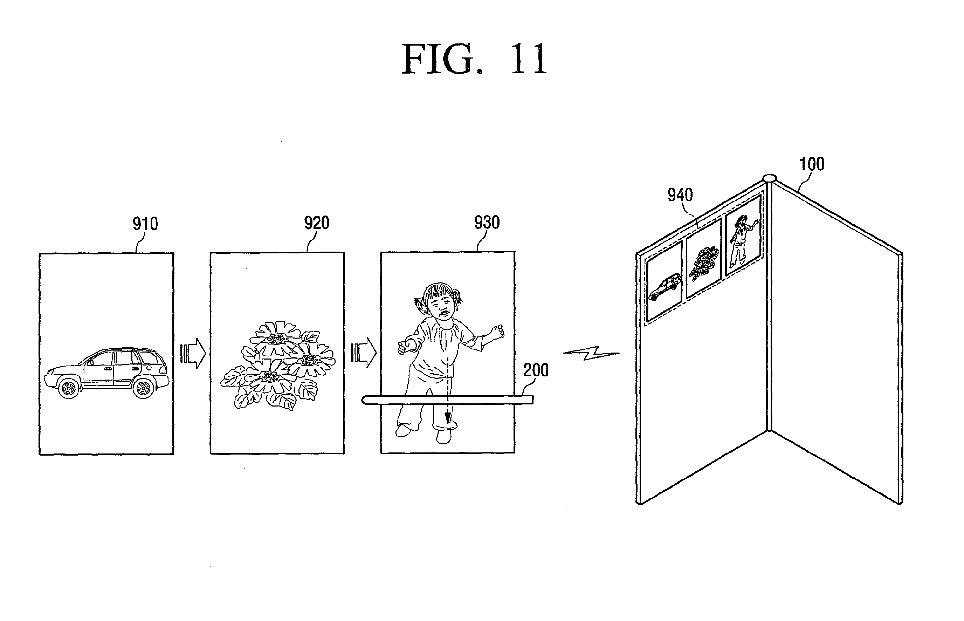

FIG. 11 illustrates a process of transmitting scanned images wirelessly. As illustrated in FIG. 11, if the scanner 200 scans objects, the scanner 200 wirelessly transmits the scanned images to the electronic album 100 even if the scanner 200 is not connected to the electronic album 100. The electronic album 100 displays the scanned images in thumbnail forms.

This method is usually used when a plurality of objects 910, 920, and 930 are scanned as illustrated in FIG. 11. For example, if the user checks the scanned images after finishing the scanning of the plurality of objects 910, 920, and 930, when some of the objects are erroneously scanned, the erroneously scanned object is retrieved and scanned again. However, if preview of the scanned images is provided and the scan status can be checked in real-time, an erroneously scanned object does not need to be retrieved inconveniently.

In order to transmit scanned images wirelessly, the electronic album 100 and the scanner 200 may include communication modules, respectively, which may be implemented as Bluetooth and Wi-Fi.

The reason why the thumbnail image 940 is displayed on the electronic album 100 is that the scanned images can be more rapidly displayed on the electronic album 100 using the minimized capacity of the scanned images. However, this is merely an exemplary embodiment of the present invention for convenience of description. Accordingly, even when the original images instead of the thumbnail image 940 are displayed on the electronic album 100, the technical idea of an exemplary embodiment of the present invention can be applied.

As described above, the first slave device or the second slave device can be connected to the electronic album 100, and thus can constitute an extended electronic album.

FIGS. 12A through 12D illustrate an extended electronic album. As illustrated in FIG. 12A, the first slave device 300 and the second slave device 400 can be connected to the electronic album 100.

More specifically, the first slave device 300 is connected to a side opposite the first hinge unit 180 from among sides of the first display 131, and the second slave device 400 is connected to a side opposite the first hinge unit 180 from among sides of the second display 133.

As illustrated in FIG. 12B, the first slave device 300 and the second slave device 400 may include hinge units 380 and 480, respectively, so as to be rotatable when the first slave device 300 and the second slave device 400 are connected to the electronic album 100.

That is, the first hinge unit 180 enables the first display 131 and the second display 133 to rotate with respect to each other. The hinge unit 380 of the first slave device 300 enables the first display 131 and the first slave device 300 to rotate with respect to each other. The hinge unit 480 of the second slave device 400 enables the second display 133 and the second slave device 400 to rotate with respect to each other.

It is merely an exemplary embodiment that the hinge units 380 and 480 are included in the first slave device 300 and the second slave device 400, respectively, for convenience of description. It may be possible that the hinge units 380 and 480 are formed at both ends of the electronic album 100, and also that the hinge units 380 and 480 are formed at the electronic album 100, and the first slave apparatus 200 or the second slave device 400.

In addition, the first slave device 300 and the second slave device 400 may include additional hinge units on opposite sides of the hinge units 380 and 480, respectively, so as to connect a third slave device or a fourth slave device.

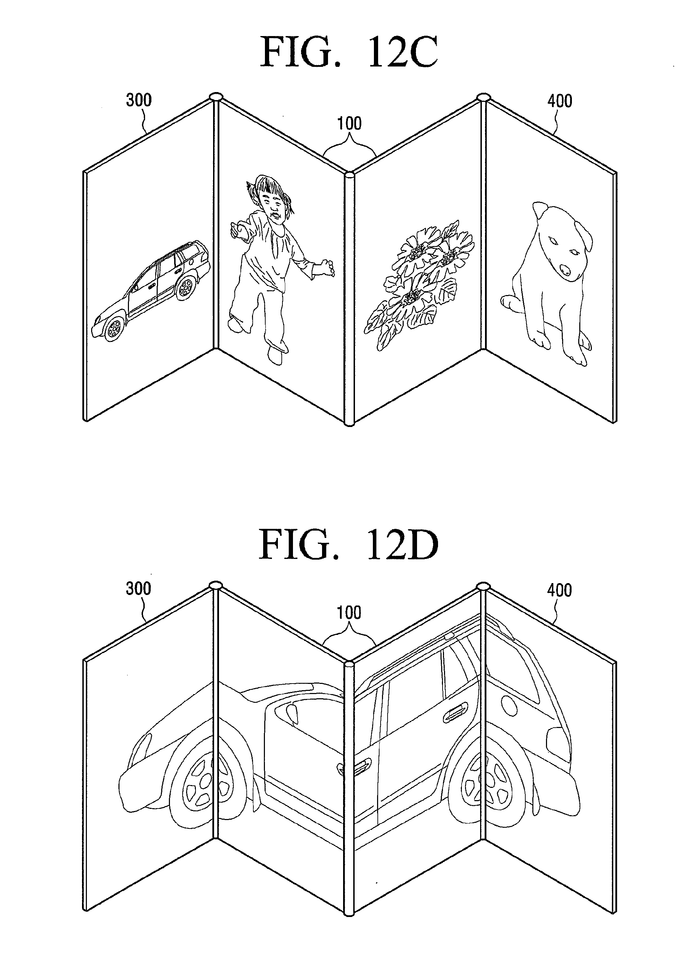

If the first slave device 300 and the second slave device 400 are connected to the electronic album 100, the extended electronic album 100 can operate in the album mode as illustrated in FIG. 12C or operate in the folding screen mode as illustrated in FIG. 12D.

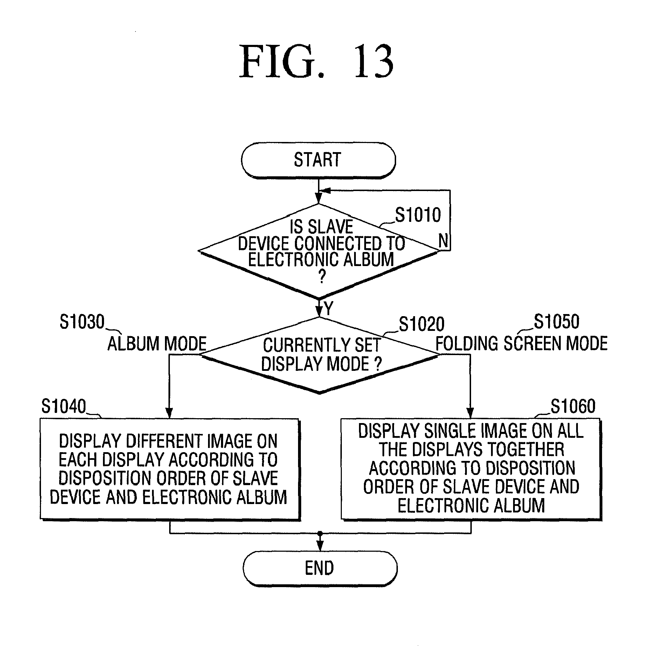

Detailed description thereof is illustrated in FIG. 13, which is a flowchart illustrating a process of displaying an image according to the mode.

Firstly, the electronic album 100 determines whether a slave device is connected thereto (S1010). If a slave device is connected to the electronic album 100, the electronic album 100 determines a currently set display mode (S1020). The display mode may include the album mode and the folding screen mode as described above.

If it is determined that the electronic album 100 operates in the album mode (S1030), the electronic album 100 displays a different image on each display in sequence according to the disposition order of the slave device and the electronic album 100 (S1040).

For example, in the extended electronic album 100 in which the first slave device 300, the first display 131, the second display 133, and the second slave device 400 are connected in sequence, an image to be firstly displayed to the image to be displayed last are displayed in an order of the first slave device 300→ the first display 131→ the second display 133→ the second slave device 400.

If it is determined that the electronic album 100 operates in the folding screen mode (S1050), the electronic album 100 displays a single image on all the displays together according to the disposition order of the slave device and the electronic album 100 (S1060).

For example, in the extended electronic album 100 in which the first slave device 300, the first display 131, the second display 133, and the second slave device 400 are connected in sequence, an original image is divided into four images, the first 1/4 of the original image is displayed on the first slave device 300, the second 1/4 of the original image is displayed on the first display 131, the third 1/4 of the original image is displayed on the second display 133, and the fourth 1/4 of the original image is displayed on the second slave device 400.

Accordingly, the user can use the extended electronic album 100 using a desired display mode.

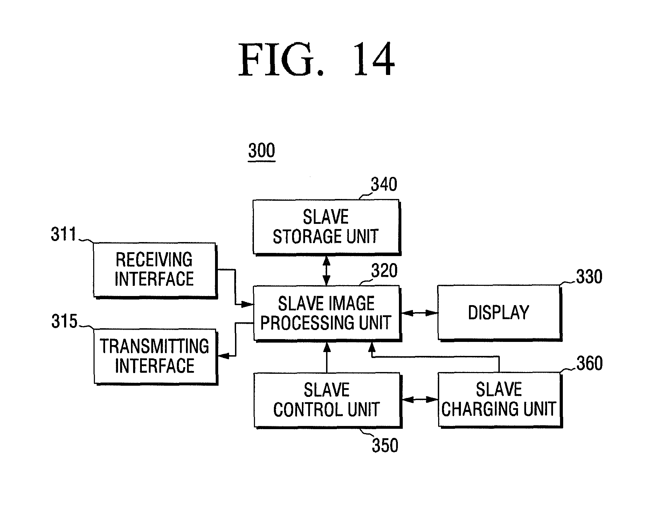

FIG. 14 is a schematic block diagram illustrating the slave device 300 according to an exemplary embodiment of the present invention. The slave device 300 includes a receiving interface 311, a transmitting interface 315, a slave image processing unit 320, a display 330, a slave storage unit 340, a slave control unit 350, and a slave charging unit 360.

The receiving interface 311 enables the slave device 300 to communicate with the electronic album 100 or another slave device which is connected to the slave device 300 in the direction in which the electronic album 100 is to be connected. Through the receiving interface 311, the slave device 300 receives scanned images and power from the electronic album 100 or the another slave device which is connected to the slave device 300 in the direction in which the electronic album 100 is to be connected.

The transmitting interface 315 enables the slave device 300 to communicate with yet another slave device which is connected to the slave device 300 in the opposite direction in which the electronic album 100 is to be connected. Through the transmitting interface 315, the slave device 300 transmits scanned images and power received from the electronic album 100 or the another slave device which is connected to the slave device 300 in the direction in which the electronic album 100 is to be connected, to the yet another slave device which is connected to the slave device 300 in the opposite direction in which the electronic album 100 is to be connected.

The slave image processing unit 320 performs signal-processing, such as noise removal and scaling, of an image received from the electronic album 100 and converts the processed image into a format to be output by the display 330.

The display 330 receives and outputs an image received from the slave image processing unit 320. The slave storage unit 340 stores program information needed to control the slave device 300, and may be implemented as flash memory or the like.

The slave control unit 350 controls the overall operation of the slave device 300. More specifically, the slave control unit 350 controls the display 330 to display a portion of an image received through the receiving interface 311, and controls the transmitting interface 315 to transmit the remaining portion of the image received through the receiving interface 311 to an additionally connected slave device.

Furthermore, the slave control unit 350 controls the slave charging unit 360 to charge the slave device 300 using power received through the receiving interface 311.

The slave charging unit 360 charges the slave device 300 using power received from the electronic album 100 through the electronic album interface 240. That is, the slave device 300 has no separate power supply, and uses power supplied by the power supply unit 160 of the electronic album 100 through the slave charging unit 360.

As described above, an extended electronic album can be implemented by adding a slave device.

In the exemplary embodiments of the present invention, an electronic album is described as an example, but is merely an exemplary embodiment of a display apparatus. Accordingly, the technical idea of the present invention can be applied to other display apparatuses.

In the exemplary embodiments of the present invention, the scanner 200 is mounted in the first hinge unit 180 which connects the first display 131 to the second display 133, but this is merely an exemplary embodiment for convenience of description. The scanner 200 may be mounted in a hinge unit which connects the electronic album 100 to the slave device 300.

As can be appreciated from the above description, the user can view images scanned by a scanner with greater ease and greater convenience. In addition, a scanner can be mounted in a display apparatus with maximized efficiency of space. Furthermore, connection between frames and connection between a frame and a scanner can be simple and easy so that communication of data and power between frames can be free.

The foregoing exemplary embodiments are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A display apparatus, comprising:
a first display;
a second display;
a first hinge unit which connects the first display to the second display; and
a control unit which controls at least one of the first display and the second display to display an image scanned by a scanner, which is detachably mountable in the first hinge, on at least one of the first display and the second display.

2. The display apparatus according to claim 1, wherein the first hinge unit comprises a first interface which receives the scanned image from the scanner.

3. The display apparatus according to claim 1 or 2, further comprising:
a storage unit which stores the scanned image,
wherein if the scanner is mounted in the first hinge unit, the control unit updates images stored in the storage unit based on the images stored in the scanner.

4. The display apparatus according to claim 1, 2 or 3, further comprising:
a power supply unit which supplies power,
wherein if the scanner is mounted in the first hinge unit, the control unit transmits the power from the power supply to the scanner through the first interface.

5. The display apparatus according to one of claim 2 to 4, wherein the first interface comprises at least one of a Universal Serial Bus (USB) interface and a Recommended Standard (RS)-232 interface.

6. The display apparatus according to one of claim 1 to 5, wherein the first hinge unit comprises a magnetic unit which removably fixes the scanner mounted in the first hinge unit.

7. The display apparatus according to one of claim 1 to 6, further comprising:
a second hinge unit which connects at least one of the first display and the second display to an external display,
wherein the second hinge unit comprises a second interface which is connected to at least one of the scanner mounted in the second hinge unit and the external display.

8. The display apparatus according to claim 7, wherein the external display displays an image received through the second interface.

9. The display apparatus according to claim 7 or claim 8, further comprising:
a power supply unit which supplies power,
wherein the scanner mounted in the second hinge unit and the external display receive the power from the power supply unit through the second interface.

10. The display apparatus according to one of claim 7 to 9, wherein the first hinge unit is disposed on one side of the first display or on one side of the second display, and the second hinge unit is disposed on a side opposite the one side of the first display or the second display.

11. The display apparatus according to one of claim 1 to 10, wherein at least one of the first display and the second display rotates with respect to the scanner as an axis, or operates as a touch screen.

12. The display apparatus according to claim 11, further comprising:
a manipulation unit which manipulates a mode of the scanner,
wherein the mode of the scanner comprises a scan mode to perform scanning and a touch mode to touch at least one of the first display and the second display.

13. The display apparatus according to one of claim 1 to 12, wherein the scanner comprises:
a Universal Serial Bus (USB) interface which transmits the scanned image to the display apparatus if the scanner is mounted in the first hinge unit; and
a wireless transmission module which wirelessly transmits the scanned image to the display apparatus if the scanner is separated from the first hinge unit.

14. The display apparatus according to one of claim 1 to claim 13, wherein the scanner is a pen-type scanner, and the display apparatus is an electronic album.

15. A display method, comprising:
determining whether a scanner is mounted in a hinge which connects a plurality of displays so that the plurality of displays can be folded;
receiving an scanned image from the scanner if the scanner is mounted in a hinge; and
outputting the received image to at least one of the plurality of displays.
